## Europäisches Patentamt

## European Patent Office

## Office européen des brevets

(19)

(11) Veröffentlichungsnummer: **0 094 440**
**B1**

(12) **EUROPÄISCHE PATENTSCHRIFT**

(45) Veröffentlichungstag der Patentschrift:
**26.02.86**

(21) Anmeldenummer: **82104181.1**

(22) Anmeldetag: **13.05.82**

(51) Int. Cl.⁴: **G 01 N 17/00,** G 01 M 11/00,
G 02 B 5/23

(54) Vorrichtung zur schnellen Demonstration der Wirkung phototroper Objekte.

(43) Veröffentlichungstag der Anmeldung:
**23.11.83 Patentblatt 83/47**

(45) Bekanntmachung des Hinweises auf die Patenterteilung:
**26.02.86 Patentblatt 86/9**

(84) Benannte Vertragsstaaten:
**AT CH DE FR GB IT LI NL SE**

(56) Entgegenhaltungen:
**DE - A - 1 904 097**
**DE - A - 2 705 865**
**FR - A - 2 263 505**
**US - A - 3 675 477**
**US - A - 3 810 698**

**Die Akte enthält technische Angaben, die nach dem Eingang der Anmeldung eingereicht wurden und die nicht in dieser Patentschrift enthalten sind.**

(73) Patentinhaber: **Firma Carl Zeiss, D-7920 Heidenheim (Brenz) (DE)**

(72) Erfinder: **Schürle, Hermann,
Bischof-Fischer-Strasse 110, D-7080 Aalen (DE)**
Erfinder: **Grimm, Wolfgang, Dr.,
Max-Beckmann-Strasse 59, D-7920 Heidenheim/Brenz (DE)**
Erfinder: **Bammert, Hubert, Auchtstrasse 30,
D-7080 Aalen-Wasseralfingen (DE)**

## Beschreibung

Die vorliegende Erfindung betrifft eine Vorrichtung zur schnellen Demonstration der Wirkung phototroper Objekte, insbesondere Brillengläser.

Phototrope Brillengläser dunkeln im hellen Tageslicht automatisch ab, wobei die Dunkelung durch kurzwellige Strahlung angeregt wird. Die Aufhellung der Gläser erfolgt unter dem Einfluß von Wärme und langwelliger Strahlung.

Soll die Wirkung phototroper Gläser demonstriert werden, beispielsweise bei Beratung eines Kunden durch den Optiker, so ist eine Lichtquelle notwendig, die kurzwellige Strahlung genügender Intensität aussendet.

Demonstrationsgeräte, die eine solche Lichtquelle enthalten, sind bekannt. So vertreibt die Anmelderin selbst ein solches Gerät unter der Bezeichnung UMBRATEST. Dieses Gerät enthält eine Quecksilberdampf-Hochdrucklampe, deren Licht die zu demonstrierenden Gläser ausgesetzt werden. Erreicht wird eine Verminderung der Lichtdurchlässigkeit des Glases innerhalb einer Bestrahlungszeit von ca. 1 Minute. Abgesehen davon, daß die volle Verminderung der Lichtdurchlässigkeit nicht erreicht wird, wird die Bestrahlungszeit oft als zulange empfunden und das Gerät ist nicht jederzeit sofort einsatzbereit, da die Lampe einige Minuten einbrennen muß.

Es ist auch firmenintern ein Demonstrationsgerät bekannt, in das die Demonstrationsobjekte eingelegt und nach Verschließen des Gerätes darin einem sehr intensitätsreichen Elektronenblitz ausgesetzt werden. Dieses Gerät hat den gravierenden Nachteil, daß sich die phototropen Effekte nicht normal aufbauen können. Dies zeigt sich u.a. in der Farbe des abgedunkelten Glases, die von der Farbe normal behandelnder Gläser abweicht.

Es ist nun die Aufgabe der vorliegenden Erfindung eine Vorrichtung zu schaffen, die eine schnelle Demonstration der Wirkung phototroper Objekte ermöglicht, ohne irgendwelche Schädigungen der phototropen Eigenschaften hervorzurufen.

Zur Lösung dieser Aufgabe dient erfindungsgemäß eine Vorrichtung, die sich durch die im Anspruchs 1 angeführten Merkmale auszeichnet.

Durch die Verwendung mehrerer aufeinanderfolgender Blitze wird die zur Demonstration der Abdunkelung notwendige Lichtmenge in mehreren Dosen aufgebracht, so daß sich die phototropen Effekte normal aufbauen und das Glas seine normale Farbe, beispielsweise grau, behält.

Es hat sich als zweckmäßig erwiesen die Vorrichtung so auszubilden, daß bei einmaligem Auslösen beispielsweise fünf Blitze innerhalb von 10 sec. gezündet werden.

Verwendung findet eine Blitzröhre, die neben sichtbarem auch ultraviolettes Licht (UV-A) emittiert, was beispielsweise durch Verwendung eines Hartglaskolbens ohne Filterbelag erreicht wird. Auch die im Gehäuse zwischen Blitzröhre und Gehäuseausnehmung angeordnete Schutzscheibe absorbiert UV-A praktisch nicht, so daß am Demonstrationsobjekt genügend kurzwelliges Licht zur Verfügung steht. UV-A Strahlung liegt defini-tionsgemäß im Wellenlängenbereich 315 bis 380 nm. An diesen Bereich schließt sich der Wellenlängenbereich des sichtbaren Lichtes (380-780nm) an.

Neben der praktisch sofortigen Einsatzbereitschaft des Gerätes ist eine Abdunklung des Demonstrationsobjektes in sehr kurzer Zeit erreicht, ohne daß störende Effekte in Kauf genommen werden müssen.

Die Ausnehmung im Gehäuse hat vorteilhaft eine rechteckförmige Grundfläche solcher Größe, daß eine Brillenfassung mit eingesetzten Gläsern Aufnahme findet. Um eine gleichmäßige Ausleuchtung des so gebildeten Hohlraumes zu gewährleisten, ist es zweckmäßig zwei nebeneinander liegende, gerade Blitzröhren zu verwenden, denen ein gemeinsamer Parabolreflektor zugeordnet ist.

Da eine Blendung der Bedienungsperson und des Kunden in jedem Falle vermieden werden soll, ist im Gehäuse ein Schalter vorgesehen, der ein Auslösen der Blitze in Gebrauchsstellung ermöglicht, jedach ab einer vorbestimmten Neigung des Gehäuses verhindert. In der Gebrauchsstellung steht das Gehäuse vert kal und seine Ausnehmung is über das Demonstrationsobjekt gestülpt.

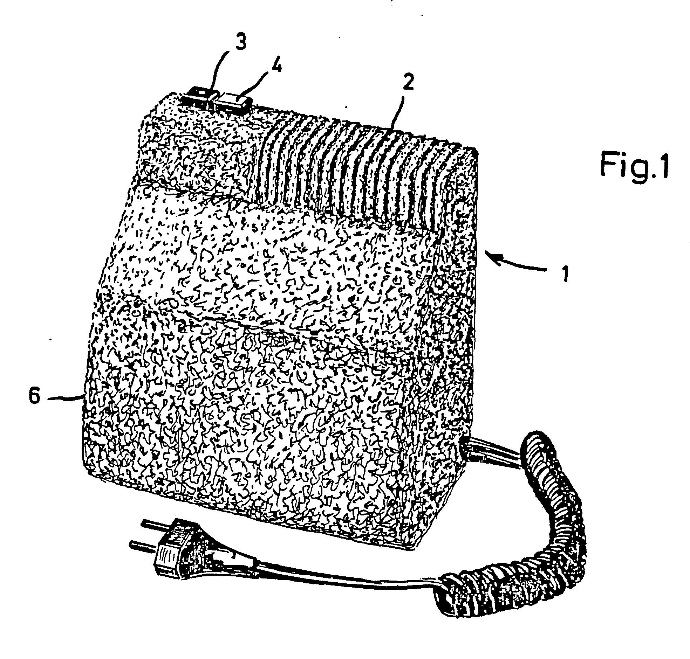

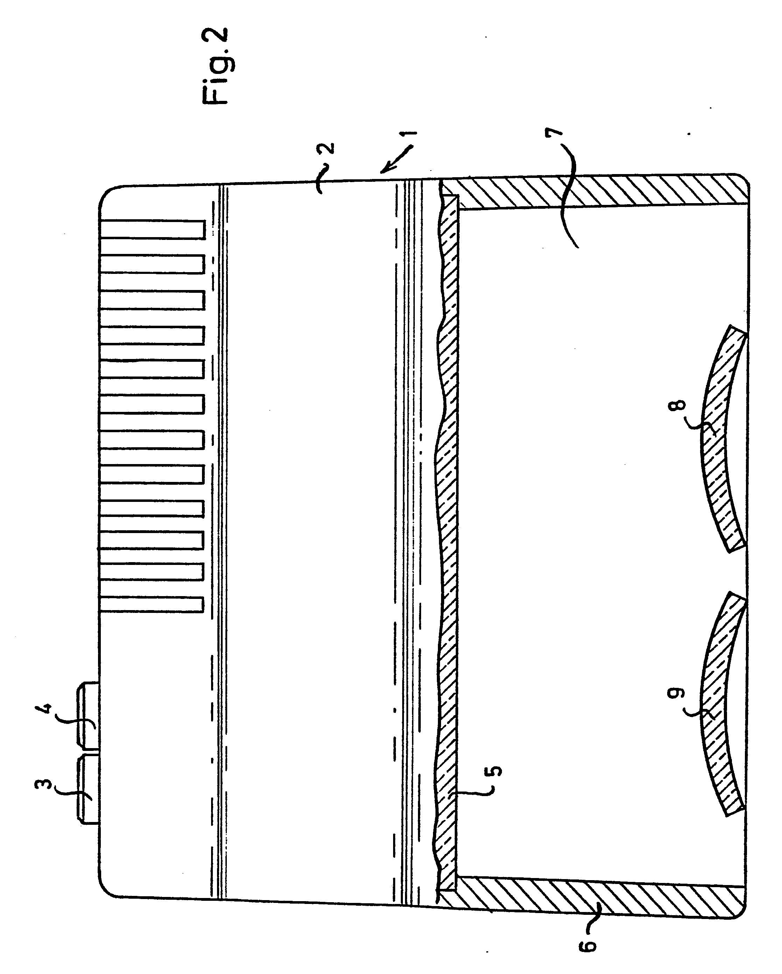

Die Erfindung wird im folgenden anhand der Fig. 1 und 2 der beigefügten Zeichnungen näher erläutert. Im einzelnen zeigen:

Fig. 1 ein Ausführungsbeispiel in perspektivischer Darstellung;

Fig. 2 eine Frontansicht im Teilschnitt.

In Fig. 1 ist mit 1 ein Demonstrationsgerät bezeichnet. Im oberen Gehäuseteil 2 sind zwei parallel nebeneinanderliegende gerade Blitzröhren mit zugeordnetem Parabolreflektor sowie die zum Betrieb dieser Blitzröhren dienende Schaltung untergebracht. Mit 3 ist ein Taster zum Auslösen einer Blitzfolge von z.B. 5 Blitzen in 10 sec. bezeichnet. Diese Blitzfolge wird beim einmaligen Druck auf den Taster 3 ausgelöst und durch die Kontroll-Leuchte 4 optisch angezeigt. Die Nennarbeit eines Blitzes liegt bei etwa 70 Ws.

Unterhalb der Blitzröhren ist eine, in Fig. 2 teilweise sichtbare Schutzscheibe 5 angeordnet. Die Blitzröhren sind so ausgebildet, daß UV-A Strahlung emittiert wird; die Schutzscheibe 5 ist so ausgebildet, daß sie diese Strahlung praktisch nicht absorbiert. Der untere Gehäuseteil 6 ist als Hohlraum 7 ausgebildet, der eine rechteckförmige Grundfläche einer solchen Größe hat, daß auf ihr eine Brillenfassung mit eingesetzten Gläsern Platz hat.

Im Betrieb wird das Gerät so über das Demonstrationsobjekt gestülpt, wie dies Fig. 2 zeigt. Hier sind als Objekt 2 zwei Brillengläser 8 und 9 verwendet. In dem im Gehäuseteil 6 gebildeten Hohlraum 7 hat auch eine großformatige Brillenfassung oder ein binokularer Mustervorhalter Platz.

Die Schaltung des Gerätes ist so ausgebildet, daß in der gezeigten Gebrauchsstellung durch Druck auf den Taster 3 eine Blitzfolge ausgelöst werden kann, daß jedoch ab einer vorbestimmten Neigung des Gehäuses eine Blitzauslösung verhindert wird.

Das Gerät 1 ist praktisch sofort einsatzbereit. Beim Drücken der Taste 3 wird eine Blitzfolge ausgelöst, wobei der Hohlraum 7 gleichmäßig mit Licht kleiner Wellenlönge ausgeleuchtet wird. Nach dieser Blitzfolge hat das Demonstrationsobjekt im allgemeinen die volle Abdunkelung erreicht. Selbstverstöndlich kann gegebenenfalls auch eine zweite oder dritte Blitzfolge ausgelöst werden.

Mit dem beschriebenen und dargestellten Gerät läßt sich die Kinetik und Farbe phototroper Brillengläser schnell und einfach demonstrieren. Es läßt sich auch vor dem Einschleifen der Gläser in die Fassung kontrollieren. ob die beiden Gläser in Farbe und Durchlässigkeit zueinander passen und welche Unterschiede bei Anisometropie und höheren dioptrischen Wirkungen zu erwarten sind.

**Patentansprüche:**

1. Vorrichtung zur schnellen Demonstration der Wirkung phototroper Objekte mit Hilfe von Elektronenblitzröhren gekennzeichnet durch mindestens eine, mit einem Reflektor versehene Elektronenblitzröhre die ohne UV-A Filter in einem auf eine Unterlage aufsetzbaren, mit einer Ausnehmung (7) zur Aufnahme des auf dieser Unterlcge liegenden Demonstrationsobjektes (8,9) versehenen Gehäuse (1) angeordnet und mit einer Schalturg verbunden ist, die bei jedem Auslösen eine Folge von Blitzen vorbestimmter Nennarbeit zündet, die in vorbestimmten Zeitabständen aufeinanderfolgen.

2. Vorrichtung nach Anspruch 1, gekennzeichnet durch einen Schalter, der ein Auslösen der Blitzröhre in Gebrauchsstellung der Vorrichtung ermöglicht, jedoch ab einer vorbestimmten Neigung der Vorrichtung das Auslösen verhindert.

3. Vorrichtung nach Anspruch 1 und 2, dadurch gekennzeichnet, daß zwei nebeneinanderliegende, gerade Blitzröhren vorgesehen sind, denen ein gemeinsamer Parabolreflektor zugeordnet ist.

4. Vorrichtung nach Anspruch 1-3, dadurch gekennzeichnet, daß zwischen den Blitzröhren und der Gehäuse-Ausnehmung (7) eine, UV-A nicht absorbierende, Schutzscheibe (5) angeordnet ist.

5. Vorrichtung nach Anspruch 1, dadurch gekennzeichnet, daß die Ausnehmung (7) des Gehäuses (1) eine rechteckförmige Grundfläche und eine solche Größe hat, daß eine Brillenfassung Aufnahme findet.

6. Vorrichtung nach Anspruch 5, dadurch gekennzeichnet, daß die Ausnehmung (7) von der undurchsichtigen Gehäusewand (6) umschlossen ist.

**Claims**

1. Device for rapidly demonstrating the action of phototropic objects by means of electron flash tubes, characterized by at least one electron flash tube associated with a reflector, said tube being arranged within a housing (1) with no UV-A filter in front of it, said housing being adapted to be placed on a support and provided with a recess (7) to receive the object (8,9) to be demonstrated while lying on said support, said flash tube being connected with circuit means which upon each actuation releases a plurality of flashes of predetermined rated energy, said flashes succeeding each other at predetermined time intervals.

2. Device according to claim 1, characterized by a switch to actuate the flash tube in the position of use of the device, but prevents actuation while the device is tilted more than a predetermined amount.

3. Device according to claims 1 and 2, characterized in that there are provided two straight flash tubes lying alongside of each other, a common parabolic reflector being associated with them.

4. Device according to claims 1 to 3, characterized in that a protective plane (5) which does not absorb UV-A is arranged between the flash tubes and the housing recess (7).

5. Device according to claim 1, characterized in that the recess (7) of the housing (1) has a rectangular base shape and is of such size that an eyeglass frame may be received in it.

6. Device according to claim 5, characterized in that the recess (7) is surrounded by an opaque housing wall (6).

**Revendications:**

1. Dispositif de démonstration d'objets photochromiques à l'aide de tubes-éclair électroniques, caractérisé en ce qu'au moins un tubeéclair électronique équipé d'un réflecteur et disposé sans filtre UV-A dans un boîtier (1) qui à son tour est adaptable sur un support et qui contient un espace creux (7) destine à abriter l'objet de démonstration (8,9) placé sur ledit suppart, est relié à un circuit déclenchant une série d'éclairs d'une puissance nominale donnée séparés par des intervalles prédéterminés.

2. Dispositif selon revendication 1, caractérisé en ce qu'un interrupteur qui assure le déclenchement du tube-éclair en position de fonctionnement exclut ce même déclenchement une fois dépassé un niveau d'inclinaison déterminé.

3. Dispositif selon les revendications 1 et 2, caractérisé en ce qu'il fonctionne sur la base de deux tubes-éclair droits placés l'un à côté de l'autre et associés à un réflecteur parabolique commun.

4. Dispositif selon les revendicatians 1 à 3, caractérisé en ce que les tubes-éclair sont séparés de l'espace creux (7) par un verre protecteur (5) qui n'absorbe pas les rayons UV-A.

5. Dispositif selon revendication 1, caractérisé en ce que l'espace creux (7) contenu dans le boîtier (1) couvre une surface de base rectangulaire et que ses dimensions sont suffisantes pour abriter une monture de lunettes.

6. Dispositif selon revendication 5, caractérisé en ce que l'espace creux (7) est entouré d'une parai non transparente (6).

Fig.1

Fig. 2